# EUROPÄISCHE PATENTSCHRIFT

(11) **EP 1 295 100 B1**
(45) Veröffentlichungstag und Bekanntmachung des Hinweises auf die Patenterteilung: **26.08.2009**
(21) Anmeldenummer: 01935903.3
(22) Anmeldetag: 08.06.2001
(51) Int. Cl.: G01N 1/00, G01N 30/20

(54) **VENTILANORDNUNG**
VALVE ARRANGEMENT
DISPOSITIF DE VANNES

(30) Priorität: 09.06.2000 CH 113900
(43) Veröffentlichungstag der Anmeldung: 26.03.2003
(73) Patentinhaber: Cueni, Hansjörg, 6362 Stansstad (CH); Scherrer, Heiner, 4227 Büsserach (CH)
(72) Erfinder: Cueni, Hansjörg, 6362 Stansstad (CH); Scherrer, Heiner, 4227 Büsserach (CH)
(74) Vertreter: Braun, André jr.
(86) Internationale Anmeldenummer: PCT/CH2001/000357
(87) Internationale Veröffentlichungsnummer: WO 2001/094909

(56) Entgegenhaltungen:
- WO-A-00/31528
- GB-A- 890 158
- US-A- 3 201 971
- US-A- 3 916 465

## Beschreibung

Die Erfindung betrifft eine Ventilanordnung mit mehreren parallel zueinander angeordneten einzelnen Ventilfunktionen.

Die meisten derzeit in der Analytik üblichen Ventilanordnungen haben eine Reihe von Nachteilen, die sich negativ vor allem auf die Durchsatzrate, aber auch auf die Präzision der erhältlichen Mess- bzw. Analyseergebnisse auswirken. Ein weiterer Nachteil besteht darin, dass bekannte Ventilanordnungen sehr kompliziert aufgebaut und deshalb störanfällig sind.

Der Erfindung liegt die Aufgabe zugrunde, eine Ventilanordnung bereitzustellen, welche die erwähnten Nachteile nicht aufweist.

Erfindungsgemäss wird dies erreicht durch eine Ventilanordnung, die sich durch die im Patentanspruch 1 angegebenen Merkmale auszeichnet. Im folgenden ist anhand der beiliegenden Zeichnungen ein bevorzugtes Ausführungsbeispiel der Erfindung beschrieben. Es zeigen:
Fig. 1 eine perspektivische Ansicht einer Ventilanordnung nach der Erfindung
Fig. 2 eine Draufsicht auf die Ventilanordnung nach Fig. 1 in einer Position der Ventilplatte
Fig. 3 einen Längsschnitt entlang A-A in Fig.2
Fig. 4 einen Längsschnitt entlang B-B in Fig. 2
Fig. 5 einen Querschnitt entlang C-C in Fig. 2
Fig. 6 einen Querschnitt entlang D-D in Fig. 2
Fig. 7 einen Querschnitt entlang E-E in Fig. 2
Fig. 8 eine weitere Draufsicht auf die Ventilanordnung in der zweiten Position der Ventilplatte
Fig. 9-11 die Schnitte A-A, C-C und D-D in der zweiten Position
Fig. 12a und 12b ein Fliessschema einer Einsatzmöglichkeit der Ventilanordnung zusammen mit einem Selektorventil

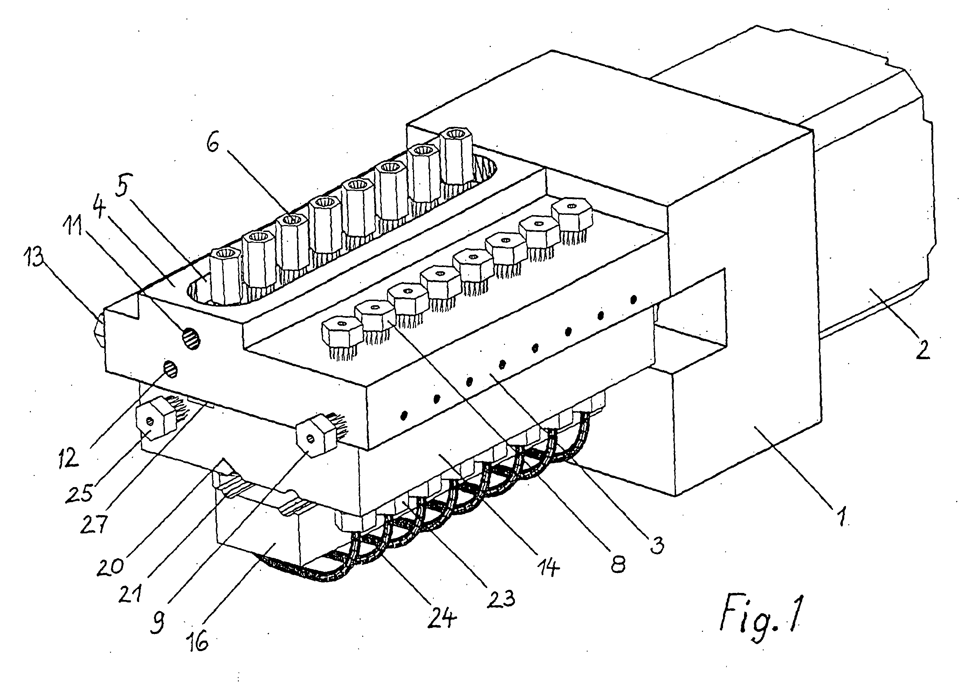

Die in Fig. 1 gezeigte Ventilanordnung ist ein Achtfachventil und besteht aus einem block- oder plattenförmigen Träger 1, an dem die anderen Teile der Ventilanordnung befestigt sind und der seinerseits in einem Analysegerät oder dergl. befestigt ist. Der Träger besteht aus Aluminium. Auf einer Seite des Trägers 1 ist ein Schrittmotor 2 angebracht, der den Antrieb bzw. die Umschaltung des Ventils bewirkt. Auf der gegenüberliegenden Seite des Trägers 1 ist eine sich horizontal erstreckende Platte 3 fest angebracht, an der sich die wesentlichen Eingangs- und Ausgangsanschlüsse der Ventilanordnung befinden und die deshalb im folgenden als Anschlussplatte bezeichnet wird. Die Anschlussplatte besteht aus einem chemisch inerten Material, z.B. aus Chromstahl.

Auf einer Seite der Oberfläche der Anschlussplatte 3 ist in einer nach oben vorspringenden Plattform 4 ein Trog 5 ausgebildet, in dem in gleichen Abständen acht Probeneinfülltrichter 6 für die Probeninjektion angeordnet sind. Die Abstände der Trichter 6 voneinander sind identisch mit den Rasterabständen von Mikrotiterplatten, so dass die acht Kanülen einer Achtfachpipette oder -spritze gleichzeitig die aus einer Reihe einer Mikrotiterplatte entnommenen Proben in die acht Probeneinfülltrichter injizieren können. Die Probeneinfülltrichter befinden sich im oberen Teil von Bohrungen, die durch die Anschlussplatte hindurch zu ihrer planen Unterseite führen.

Zur Erhöhung der Seitenwände des Trogs ist ein Aufsatz 7 auf die Plattform 4 vorgesehen, dessen Funktion im folgenden näher erläutert wird.

Parallel zur Reihe der Probeneinfülltrichter 6 ist auf der anderen Seite der Oberfläche der Anschlussplatte 3 in acht durch die Platte zu ihrer Unterseite führenden Bohrungen eine Reihe von acht Ausgangsanschlüssen 8 angeordnet. Die Anschlüsse 8 sind als Hochdruckanschlüsse ausgebildet und dienen zur Verbindung mit Leitungen, die je nach dem Einsatz der Ventilanordnung einzeln zu einer Reihe von Detektoren oder über ein Selektorventil zu einem Detektor, beispielsweise einem Massenspektrometer führen, wie im folgenden noch näher ausgeführt wird.

Die Reihe der Ausgangsanschlüsse 8 ist gegenüber der Reihe der Probeneinfülltrichter 6 in Längsrichtung versetzt und zwar um eine Distanz, die kleiner ist als Rastermass der Mikrotiterplatten. Im vorliegenden Fall beträgt die Versetzung 2mm. Diese Distanz entspricht, wie im folgenden gezeigt wird, dem Ventilhub.

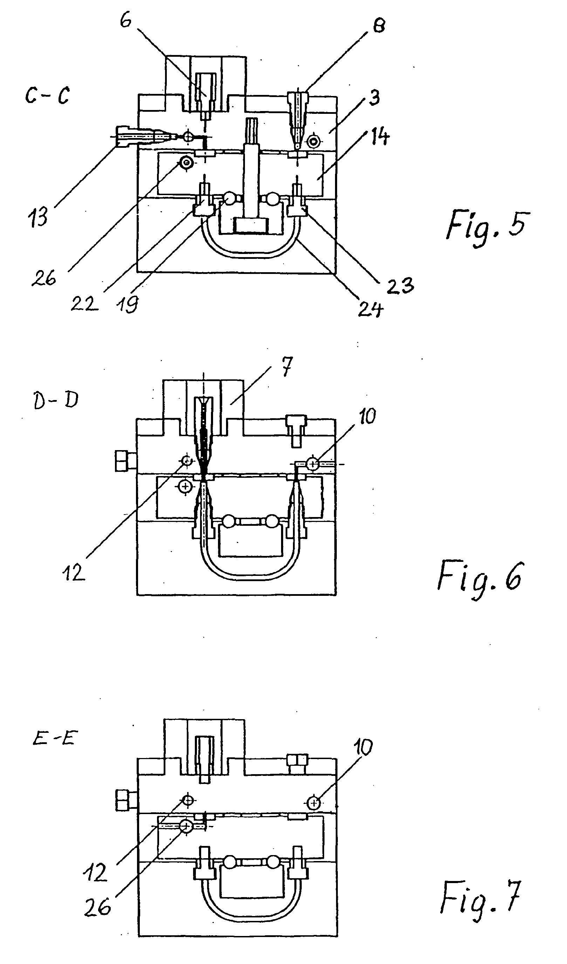

An der Stirnseite der Anschlussplatte 3 befinden sich noch ein weiterer Anschluss 9 und zwei Bohrungen 11,12. Der Anschluss 9 sitzt im Mündungsteil einer sich längs durch die Anschlussplatte 3 erstreckenden Bohrung 10 (s. Fig. 5-7), die mit Querbohrungen zusammen eine Ueberlaufsystem bildet und über den Anschluss 9 mit einem Abfallbehälter verbunden werden kann.

Die obere Bohrung 11 führt vom Inneren des Trogs 5 nach aussen und dient ebenfalls zum Anschluss einer Ueberlaufsystem für Spülflüssigkeit aus dem Trog zu einem Abfallbehälter. Wie im folgenden noch näher ausgeführt wird fällt im Trog eine grössere Menge Spülflüssigkeit an, so dass an der Bohrung 11 eine grösser dimensionierte Leitung angeschlossen werden muss.

Die Bohrung 12 ist in Inneren der Anschlussplatte durch die ganze Länge geführt und bildet, wie noch gezeigt wird, zusammen mit einer Anzahl von Querbohrungen eine Lösungsmitteldruckleitung, d.h. ein Zuführungssystem für Lösungsmittel, das in der Regel je nach Anwendung von einer Hochdruckpumpe zugeführt wird. Auf der in Fig. 1 abgewandten Seitenfläche der Anschlussplatte 3 ist noch ein weiterer Anschluss 13 erkennbar, der mit zwei weiteren Anschlüssen zu dem erwähnten Zuführungssystem für das unter Druck geförderte Lösungsmittel gehört.

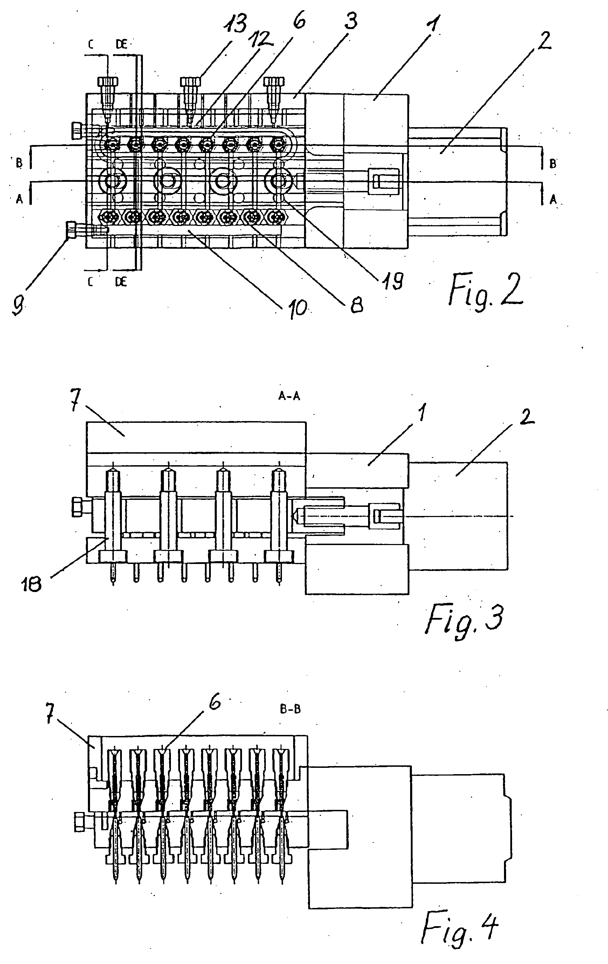

In der Draufsicht der Fig. 2 ist die Versetzung der Probeneinfülltrichter 6 und der Ausgangsanschlüsse 8 erkennbar. Ausserdem sind die drei zur Lösungsmitteldruckleitung 12 gehörenden Anschlüsse 13 erkennbar.
Weitere im Inneren der Anschlussplatte 3 verlaufende Verbindungskanäle, sind in den verschiedenen Schnittzeichnungen der Fig.4-7 sichtbar und werden im weiteren Verlauf der Beschreibung erklärt.

Unter der Anschlussplatte 3 ist eine schieber- oder schlittenförmige Ventilplatte 14 angeordnet, die durch den Schrittmotor 2 relativ zur Anschlussplatte 3 in Längsrichtung zwischen zwei Positionen hin und her geschoben wird.

Unterhalb der Ventilplatte befindet sich eine Lagerplatte 16, die fest mit der Anschlussplatte 3 verbunden ist. In Fig. 3 ist sichtbar wie die Lagerplatte 16 an der Anschlussplatte 3 mittels Schrauben 18 befestigt ist. Zwischen der Lagerplatte 16 und der Ventilplatte 14 ist ein Kugellager angeordnet, das aus Kugeln 19 besteht, die in zwei oberen, sich über die ganze Länge der Unterseite der Ventilplatte 14 erstreckenden, parallelen Rillen 20 und entsprechenden unteren Rillen 21 in der Oberfläche der Lagerplatte 16 gelagert sind.

Die Ventilplatte ist auf ihrer Unterseite mit zwei Reihen 22,23 von je acht Hochdruckanschlüssen versehen, die jeweils im unteren Teil von gerade durch die Ventilplatte zu ihrer Oberfläche führenden Bohrungen sitzen. Die eine der beiden Reihen von Anschlüssen 22 liegt in einer Ebene mit den Einfülltrichtern 6, die andere Reihe von Anschlüssen 23 liegt in einer Ebene mit den Ausgangsanschlüssen 8. Die einzelnen Anschlüsse innerhalb der beiden Reihen haben voneinander wiederum dieselben Abstände wie die Probeneinfülltrichter oder die Ausgangsanschlüsse, d.h. den von der Mikrotiterplatte her vorgegebenen Rasterabstand der Probenbehälter. Die beiden Anschlussreihen 22,23 in der Ventilplatte sind, anders als in der Anschlussplatte 3 nicht in Längsrichtung gegeneinander versetzt.

Jeweils zwei einander gegenüberliegende Anschlüsse der beiden Reihen sind durch unterhalb der Lagerplatte hindurchführende, exakt gleich lange, bogenförmige Leitungen miteinander verbunden, welche Probenschleifen 24 darstellen. Die Probenschleifen 24 dienen dem genauen Abmessen der Probenmengen, die einem Detektor zugeführt werden.

An der Stirnseite der Ventilplatte 14 befindet sich ein Hochdruckanschluss 25, der in der Mündung einer sich über annähernd die ganze Länge der Ventilplatte erstreckenden Bohrung 26 sitzt. Die Bohrung 26 (s.Fig. 5-7) bildet zusammen mit Querbohrungen, eine Spülleitung, d.h. ein Zuleitungssystem für Spülflüssigkeit zu den Einfülltrichtern in einer der beiden Ventilpositionen, wie nachfolgend noch näher erläutert wird.

In der oberen Fläche der Ventilplatte befinden sich im Bereich der Mündungen der zu den Anschlussreihen 22,23 gehörenden Bohrungen in zwei parallelen Nuten angeordnete Dichtungsstreifen 27, durch die mittels des Anpressdrucks, mit dem die Ventilplatte durch die Verschraubung der Lagerplatte 16 mit der Anschlussplatte 3 gegen die letztere gedrückt wird, die Abdichtung der einzelnen Kanäle voneinander sicher gewährleistet ist.

Die beiden Positionen, welche die Ventilplatte einnehmen kann, entsprechen der erwähnten Längsversetzung zwischen den Probeneinfülltrichtern 6 und den Ausgangsanschlüssen 8. Diese Versetzung beträgt im vorliegenden Ausführungsbeispiel 2 mm. Die beiden Anschlussreihen 22,23 in der Ventilplatte können also entweder mit den Probeneinfülltrichtern 6 oder mit den Ausgangsanschlüssen 8 in Übereinstimmung, d.h. also in Verbindung gebracht werden. Dies wird im folgenden anhand der Schnittdarstellungen der Fig.4-7 näher erläutert.

In der in Fig.4 im Längsschnitt gezeigten Position der Ventilplatte 14 sind die Probeneinfülltrichter 6 mit der Anschlussreihe 22 der Probenschleifen 24 in Verbindung. Gleichzeitig sind die Mündungen der Spülleitung 26 an der Berührungsfläche zwischen Anschlussplatte und Ventilplatte geschlossen. Dies ist aus den in Fig. 5-8 gezeigten Querschnitten ebenfalls ersichtlich, die auch die Situation auf der anderen Seite, d.h. bei den Ausgangsanschlüssen und der Anschlussreihe 23, zeigen. Der in Fig. 5 gezeigte Schnitt C-C führt durch die Mittelebene der ersten Querbohrung der Lösungsmitteldruckleitung, die mit einem der Aussenanschlüsse 13 koaxial verläuft. Der zur Berührungsfläche führende Kanal ist in dieser Position geschlossen. Auf der anderen Seite liegt in dieser Schnittebene die Achse des ersten Ausgangsanschlusses 8, dessen Mündung an der Unterseite der Anschlussplatte ebenfalls geschlossen ist.

Der in Fig. 6 gezeigte Schnitt D-D führt durch die Achse des zweiten Probeneinfülltrichters und zeigt, dass dieser Trichter mit dem entsprechenden Anschluss der Reihe 22 in der Ventilplatte in Verbindung ist. Auf der anderen Seite der Schleife ist der entsprechende Anschluss der Reihe 23 mit dem Ueberlaufsystem in Verbindung. Somit kann also in dieser Position mit einer Spritze eine Probe in den Probeneinfülltrichter gefüllt und mit dieser Probe die Probenschleife gefüllt werden. Eine überschüssige Probenmenge gelangt in das Ueberlaufsystem. Da in dieser Position alle acht Probeneinfülltrichter 6 in gleicher Weise mit den Probenschleifen verbunden sind, können alle acht Probenschleifen gleichzeitig gefüllt werden.

Der in Fig. 7 gezeigte Schnitt E-E zeigt schliesslich, dass in dieser Position auch das Spülsystem an der Berührungsfläche zwischen Anschlussplatte 3 und Ventilplatte 14 geschlossen ist.

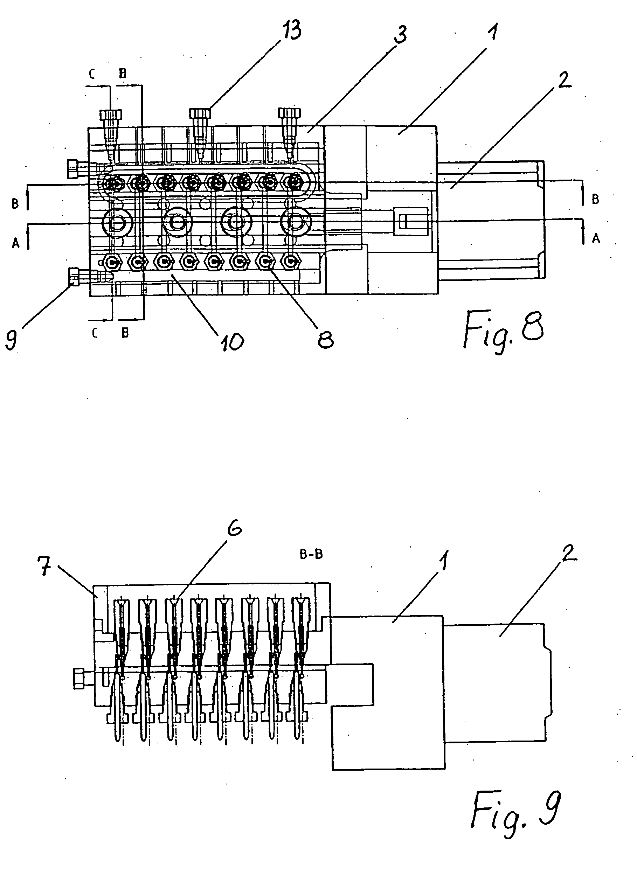

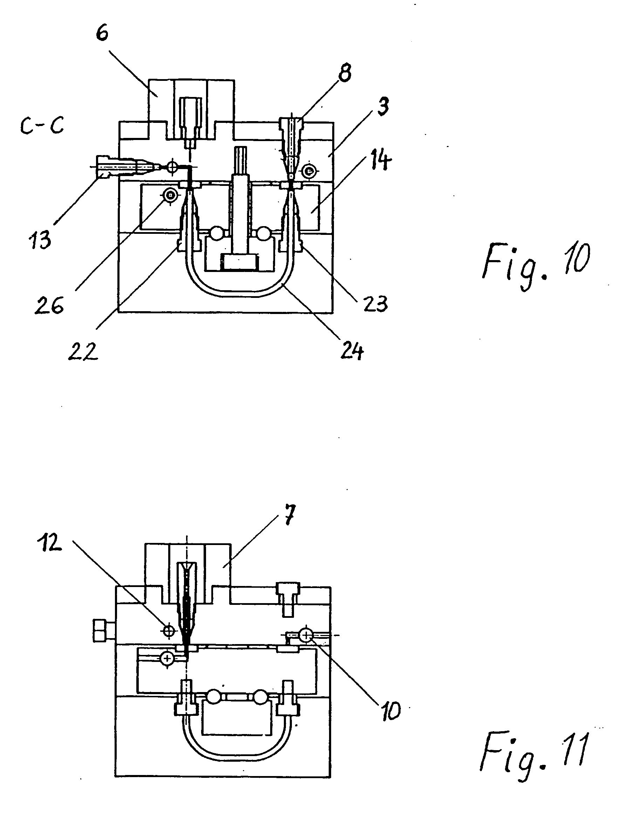

Die Situation in der zweiten Position der Ventilplatte ist in den Fig. 8-11 gezeigt. In der Draufsicht der Fig. 8 ist ersichtlich, dass nunmehr die Ausgangsanschlüsse 8 mit der Anschlussreihe 23 in Deckung sind, während sich die Probeneinfülltrichter 6 nicht mit der Anschlussreihe 22 decken. In dem in Fig.9 gezeigten Längsschnitt A-A ist dies erkennbar. Die Anschlussreihe 22 ist nunmehr mit der Druckleitung 12 in Verbindung. Der durch die erste Querbohrung der Druckleitung verlaufende Querschnitt C-C ( vgl. Fig. 5 ) zeigt nun in Fig. 10, dass die erste Probenschleife mit dem Drucksystem und auf der anderen Seite mit dem Ausgangsanschluss in Verbindung ist. In dieser Position wird also der Ausgangsanschluss 8 einem Detektor zugeführt.

Gleichzeitig sind, wie in dem in Fig. 11 gezeigten Schnitt D-D ersichtlich, die Probeneinfülltrichter 6 mit dem Spülsystem in Verbindung. Das über das Spülsystem zugeführte Lösungsmittel spült den Probeneinfülltrichter. Gleichzeitig werden auch die Kanülen gespült, die zu diesem Zweck noch in der Einfüllposition verbleiben, bis der Spülvorgang beendet ist. Der Spülvorgang ist früher abgeschlossen als die Probenentnahmesequenz, so dass die Achtfachspritze bereits wieder gefüllt und in die Einfüllposition gebracht werden kann. Sobald die Probenentnahme beendet ist, wird die Ventilplatte wieder in die erste Position geschaltet, in der ohne Verzögerung die Füllung der Probenschleifen mit den nächsten Proben erfolgt.

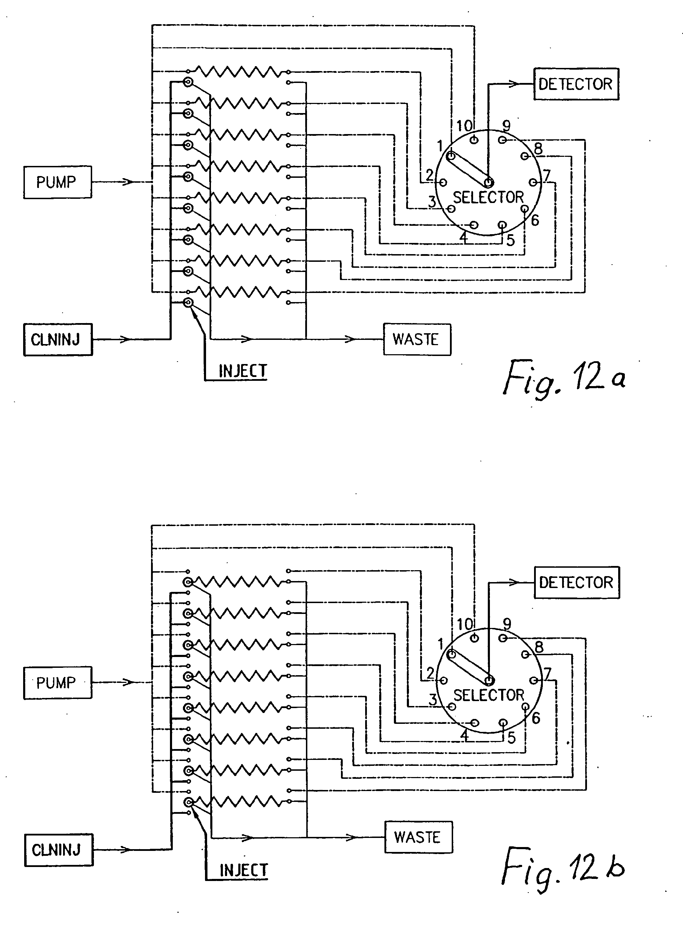

Eine Möglichkeit des Einsatzes der Ventilanordnung ist im Fliessschema der Fig. 12a, b gezeigt. Die erfindungsgemäße Ventilanordnung arbeitet mit einem handelsüblichen Selektorventil zusammen. Die Ausgangsanschlüsse 8 sind über einzelne Leitungen mit den einzelnen Eingängen 1-10 des Selektors verbunden. Der Ausgang des Selektors ist mit einem Detektor, beispielsweise einem Massenspektrometer verbunden. Die Lösungsmittelpumpe ist gleichzeitig mit der Lösungsmitteldruckleitung 12 und mit mindestens einem einzelnen Eingang des Selektors verbunden.

In der in Fig. 12a dargestellten ersten Position der erfindungsgemäßen Ventilanordnung sind, wie schon beschrieben, die Probeneinfülltrichter 6 über die Probenschleifen 24 mit dem Überlaufsystem verbunden. In dieser Position erfolgt die gleichzeitige Aufgabe von acht Proben mittels einer Achtfachspritze, die durch die Funktionsbezeichnung "INJECT" angedeutet ist. Die überschüssige Menge gelangt über das Überlaufsystem zu einem mit "WASTE" bezeichneten Abfallbehälter. Die Verbindungen der Lösungsmitteldruckleitung sind in dieser Position in der Ventilanordnung geschlossen. Ebenso die Verbindungen der Spülleitung. Hingegen besteht eine Verbindung zwischen der Pumpe und dem Selektor, so dass dem Massenspektrometer reines Lösungsmittel zugeführt wird, mit dem eine Nullmessung erfolgen kann.

Die in Fig. 12b gezeigte zweite Position bringt die Lösungsmitteldruckleitung mit den Probenschleifen und deren Ausgangsanschlüsse mit dem Selektorventil in Verbindung. Das Selektorventil kann durch Weiterschaltung auf die Position 1-10 die einzelnen Proben auf den Probenschleifen hintereinander abrufen und dem Massenspektrometer zuführen.

Während dies abläuft, findet auf der Eingangsseite des erfindungsgemäßen Ventils die Spülung der Probeneinfülltrichter 6 und der Spritzenkanülen statt. Die Probeneinfülltrichter 6 sind mit dem durch "CLNINJ" bezeichneten Spülsystem verbunden. Die Spülflüssigkeit fliesst aus dem Trog 5 in den "WASTE" ab. Wenn die letzte Probenschleife in Richtung Massenspektrometer geleert ist, ist die Eingangsseite bereit für die nächste Probenaufgabe, die in sehr kurzer Zeit erfolgt. Das Selektorventil kann also nach sehr kurzer Verzögerung bereits die nächste Probe dem Massenspektrometer zuführen.

Auf diese Weise erhält das Massenspektrometer eine ununterbrochene Folge von Proben mit vernachlässigbarer Verzögerung zwischen jedem Achterblock. Dies ergibt eine nie zuvor erreichte Durchsatzrate.

## Patentansprüche

1. Ventilanordnung mit einer vorgegebenen Zahl von parallel zueinander angeordneten einzelnen Ventilfunktionen, **gekennzeichnet durch** eine feste Anschlussplatte mit der gleichen vorgegebenen Zahl von Probeneinfülltrichtern und der gleichen vorgegebenen Zahl von versetzt zu den Probeneinfülltrichtern angeordneten Ausgangsanschlüssen zur Weiterleitung der Proben und eine mit der gleichen vorgegebenen Zahl von Probenschleifen zur Aufnahme genau abgemessener Probenmengen versehenen Ventilplatte, die zwischen einer ersten Position, in welcher die Probenschleifen mit den Probeneinfülltrichtern verbunden sind, und einer zweiten Position, in welcher die Probenschleifen mit den Ausgangsanschlüssen verbunden sind, linear verschiebbar ist.

2. Ventilanordnung nach Anspruch 1, **dadurch gekennzeichnet, dass** in der ersten Position der Ventilplatte die Probenschleifen ausgangsseitig mit einer Ueberlaufleitung verbunden sind.

3. Ventilanordnung nach Anspruch 1, **dadurch gekennzeichnet, dass** in der zweiten Position der Ventilplatte die Probenschleifen eingangsseitig mit einer Lösungsmitteldruckleitung und gleichzeitig die Probeneinfülltrichter mit einem Spülsystem verbunden sind.

4. Probenverarbeitungssystem **gekennzeichnet durch** eine Ventilanordnung nach einem der Ansprüche 1-3, deren Ausgangsanschlüsse einzeln mit den Eingängen eines ausgangsseitig mit einem Detektor verbundenen Selektorventils verbunden sind.

## Claims

1. Valve arrangement having a specified number of individual valve functions arranged parallel to one another, **characterized by** a fixed connection plate having the same specified number of sample filling funnels and the same specified number of exit connections arranged offset relative to the sample filling funnels for transferring the samples and a valve plate which is provided with the same specified number of sample loops for receiving exactly measured sample quantities and which is linearly displaceable between a first position, in which the sample loops are connected to the sample filling funnels, and a second position, in which the sample loops are connected to the exit connections.

2. Valve arrangement according to Claim 1, **characterized in that**, in the first position of the valve plate, the sample loops are connected on the exit side to an overflow pipe.

3. Valve arrangement according to Claim 1, **characterized in that**, in the second position of the valve plate, the sample loops are connected on the entry side to a solvent pressure pipe and at the same time the sample filling funnels are connected to a flushing system.

4. Sample processing system, **characterized by** a valve arrangement according to any of Claims 1 - 3, the exit connections of which are connected individually to the entries of a selector valve connected on the exit side to a detector.

## Revendications

1. Dispositif de vannes avec un nombre donné de fonctions de vannes individuelles disposées de manière parallèle les unes par rapport aux autres, **caractérisé en** une plaque de raccordement fixe avec le même nombre donné de trémies de remplissage d'échantillons et le même nombre donné de raccordements de sortie disposés de manière décalée par rapport aux trémies de remplissage d'échantillons pour la transmission des échantillons, et une plaque de vannes munie du même nombre donné de boucles d'échantillons pour la réception de quantités d'échantillons exactement mesurées, où cette plaque de vannes est linéairement déplaçable entre une première position, dans laquelle les boucles d'échantillons sont reliées avec les trémies de remplissage d'échantillons, et une deuxième position, dans laquelle les boucles d'échantillons sont reliées aux raccordements de sortie.

2. Dispositif de vannes selon la revendication 1, **caractérisé en ce que** dans la première position de la plaque de vannes, les boucles d'échantillons sont reliées du côté de la sortie avec une conduite de trop-plein.

3. Dispositif de vannes selon la revendication 1, **caractérisé en ce que** dans la deuxième position de la plaque de vannes, les boucles d'échantillons sont reliées du côté de l'entrée avec une conduite sous pression de solvant et en même temps les trémies de remplissage d'échantillons sont reliés avec un système de rinçage.

4. Système de traitement d'échantillons **caractérisé en** un dispositif de vannes selon l'une des revendications 1 à 3, dans lequel les raccordements de sortie sont reliés individuellement avec les entrées d'une vanne sélectrice qui est reliée du côté de la sortie avec un détecteur.
